# EUROPEAN PATENT APPLICATION

(11) **EP 1 270 623 A1**
(43) Date of publication of application: **02.01.2003**
(21) Application number: 01912388.4
(22) Date of filing: 15.03.2001
(51) Int. Cl.: C08F 279/02

(54) **PROCESS FOR PRODUCING GRAFT COPOLYMER LATEX**

(30) Priority: 23.03.2000 JP 2000082354
(71) Applicant: KANEKA CORPORATION, Osaka-shi, Osaka 530-8288 (JP)
(72) Inventor: NODA, Mitsunaga, Kakogawa-shi, Hyogo 675-0033 (JP); HASEGAWA, Mitsumasa, Takatsuki-shi, Osaka 569-1029 (JP); UENO, Masakuni, Takasago-shi, Hyogo 676-0026 (JP)
(74) Representative: VOSSIUS & PARTNER
(86) International application number: JP0102049
(87) International publication number: WO01070836

(57) **Abstract**

There is provided a process for producing a copolymer latex obtained by graft-polymerizing a rubber latex and a graft-polymerizable monomer without decreasing productivity.

In case of removing non-reacted monomer from a rubber latex before graft polymerization, non-reacted monomer is removed in a short time by adding an electrolyte to control foaming of a rubber latex, and a graft copolymer latex is prepared without decreasing productivity.

## Description

### TECHNICAL FIELD

The present invention relates to a process for producing a graft copolymer latex comprising graft-polymerizing a rubber latex and a monomer graft-polymerizable therewith. It relates to a process for producing, for example, ABS (acrylonitrile butadiene styrene) resin and MBS (methyl methacrylate butadiene styrene) resin by emulsion polymerization. In particular, it relates to a process for producing a graft copolymer latex without decreasing quality and productivity by removing non-reacted substance in the rubber latex before polymerization.

### BACKGROUND ART

It is known that a copolymer prepared by graft-polymerizing a conjugated rubber latex and a monomer graft-polymerizable with the rubber includes a resin such as ABS resin, MBS resin or high impact polystyrene, and is mainly used for improving impact resistance.

In this method, graft polymerization with a non-reacted monomer remaining in a rubber latex causes to deteriorate properties of the graft copolymer such as the impact resistance of the product. Therefore, it is necessary to remove the non-reacted monomer remaining in the rubber latex before graft polymerization.

As a method for removing the non-reacted monomer remaining in the rubber latex, a method of steam distillation is frequently used as described in Japanese Unexamined Patent Publication No. 41829/1980, In this method, however, the rubber latex is deteriorated and precipitated due to heating, which leads to decrease the product quality and productive efficiency. Also, use of steam decreases the solid concentration of the rubber latex due to condensed water, leading to decrease of productivity.

Other methods include a process for removing the non-reacted monomer under reduced pressure and a process for bubbling inert gas as described in Japanese Unexamined Patent Publication No. 199103/1990. However, application of these methods to a foamable latex causes foaming. And there arise problems that the product yield is decreased due to generation of a precipitate, the efficiency of heat transfer at graft polymerization is decreased due to the precipitate being adherent to the wall of the polymerization apparatus, and the equipment and environmental pollution may occur which is caused by releasing the latex through the pressure reduction device. In case of preparing a rubber latex having a larger solid concentration for improving productivity, the above problems become more serious in accordance with increasing viscosity of the rubber latex.

In order to solve these problems, it is necessary to reduce foaming of the latex at removing the non-reacted monomer. Concretely, there is a method of reducing the removal amount of non-reacted monomer against time or a method of using a defoaming agent. However, in the former method, it takes time to reduce the concentration of the non-reacted monomer, leading to a problem of productivity decrease. Also, in the latter method there is a problem that kinds of applicable rubber latexes and defoaming agents are limited.

### DISCLOSURE OF INVENTION

In view of the above problems, it is the object of the present invention to provide a process for producing a graft copolymer latex comprising graft-polymerizing a rubber latex and a graft-polymerizable monomer with the rubber latex, wherein the graft copolymer latex is prepared without decreasing quality and productivity due to increasing precipitate.

As a result of intensive studies for solving the above problems, it was found out that the addition of an electrolyte before removing a non-reacted monomer from the rubber latex made it possible to lower foamability of the rubber latex. Namely, it has been found that the non-reacted monomer could be removed with controlling foaming of the rubber latex in either method of removing the non-reacted monomer under reduced pressure or of bubbling inert gas once the electrolyte is added. According to this process, the amount of removed non-reacted monomer against time can be increased greater than in a conventional method, and therefore, it is greatly effective in improving productivity.

Further investigation led to the finding that the electrolyte used in the above process was effectively at least one electrolyte selected from a group consisting of an organic acid having a carboxyl group and at most 6 carbon atoms, a salt thereof, an inorganic sodium salt and an inorganic potassium salt.

Further investigation led to the finding that a neutral salt was more effectively used as the electrolyte.

Namely, the present invention relates to a process for producing a graft copolymer latex comprising graft-polymerizing a conjugated rubber latex and at least one monomer graft-copolymerizable with the rubber latex, which comprises adding an electrolyte to the conjugated rubber latex before graft-polymerization, removing a non-reacted monomer in the rubber latex in the presence of the electrolyte, and then graft-polymerizing the monomer.

The above electrolyte is preferably at least one electrolyte selected from a group consisting of an organic acid having a carboxyl group and at most 6 carbon atoms, a salt thereof, an inorganic sodium salt and an inorganic potassium salt.

The above electrolyte is preferably a neutral salt.

### BEST MODE FOR CARRYING OUT THE INVENTION

In the process for producing a graft copolymer latex of the present invention, graft-copolymerizable monomer is graft-copolymerized with a conjugated diene rubber latex obtained by emulsion-polymerizing a conjugated diene monomer or a conjugated diene monomer and a monomer copolymerizable therewith containing an ethylenically unsaturated monomer.

Herein, examples of the conjugated diene monomer are 1,3-butadiene, isoprene, chloroprene and the like. Among them, 1,3-butadiene is preferable from the viewpoint of effect on improving the productive efficiency.

Examples of the ethylenically unsaturated monomer copolymerizable with the conjugated diene monomer are various vinyl compounds, olefinic compounds and the like. Among them, a methacrylate ester, an aromatic vinyl compound, a substituted derivative thereof and a vinyl cyanide are preferable. These can be used alone or in a mixture of two or more. The methacrylic ester includes methyl methacrylate, ethyl methacrylate and the like, the aromatic vinyl compound includes styrene, α-methyl styrene and the like, the substituted derivative includes vinyl toluene, chlorostyrene and the like, and the vinyl cyanide includes acrylonitrile and the like.

Examples of the graft-polymerizable monomer are an aromatic vinyl compound, an acrylate ester, a methacrylate ester, acrylonitrile, acrylic acid, methacrylic acid and the like. These can be used alone or in a combination of two or more. The aromatic vinyl compound includes styrene, α-methylstyrene and the like, the acrylate ester includes methyl acrylate, ethyl acrylate and the like, and the methacrylate ester includes methyl methacrylare, ethyl methacrylate and the like.

The amount of the graft-copolymerizable monomer which is graft-polymerized with the conjugated diene rubber latex is suitably adjusted so that the product prepared according to the present preparation process shows the aimed product performance.

The above rubber latex can be obtained by emulsion polymerizing the conjugated diene monomer alone or a monomer mixture of the conjugated diene monomer and the ethylenically unsaturated monomer copolymerizable therewith.

Herein, the ratio of the conjugated diene monomer is preferably 70 % by weight in the total monomers comprising the conjugated diene monomer and the ethylenically unsaturated monomer copolymerizable therewith. When it is less than 70 % by weight, the polymerized article remarkably lacks rubber properties and fails to provide toughness.

The emulsion polymerization is performed in the presence of, preferably 60 to 200 parts by weight, more preferably 70 to 150 parts by weight of water based on 100 parts by weight of the total monomers. When the amount of water is less than 60 parts by weight, the emulsion of the monomers in the polymerization solution tends to be difficult. When it is more than 200 parts by weight, there is a tendency that the solid concentration of the copolymer latex is decreased to lower productivity.

The reaction temperature may be at least 30°C, preferably 35 to 80°C, more preferably 40 to 60°C. When the temperature is lower than 30°C, there is a tendency that the polymerization period is prolonged and the productivity is lowered due to a small polymerization reaction rate. When it is higher than 80°C, there is a tendency that expensive polymerization equipment which can stand the vapor pressure of the monomers at the reaction temperature is required which increases production costs.

As the polymerization initiator of the present invention, there can be used a redox initiator comprising a water-soluble persulfuric acid such as potassium persulfate, sodium persulfate or ammonium persulfate or a peroxide such as hydrogen peroxide, cumene hydroperoxide or paramenthane hydroperoxide, as one component.

The amount of an emulsifier is preferably 1 to 4 parts by weight based on 100 parts by weight of the total monomers. In order to prevent each particle from fusing or precipitating due to lack of the emulsifier on the particle surface, the emulsifier may be added during polymerization. The emulsifier of the present invention is what is used in the usual rubber polymerization. Examples thereof are a fatty acid soap such as sodium oleate, a resin acid soap such as potassium disproportionated rosin, sodium lauryl sulfate and sodium dodecylbenzene sulfonate and the like.

There is no particular limitation for using a chain transfer agent such as mercaptan or a cross-linking agent such as allyl methacrylate.

As the electrolyte of the present invention which is added to the rubber latex prior to removing the non-reacted monomer after polymerization of the rubber latex, there can be used an organic acid, a metal salt thereof, an inorganic alkali metal salt and the like. Among them, forming of the rubber latex can be efficiently controlled by using the organic acid having a carboxyl group and at most 6 carbon atoms such as formic acid, acetic acid, propionic acid, oxalic acid, succinic acid, malic acid or citric acid, a salt thereof, an inorganic sodium salt or an inorganic potassium salt alone or a mixture of at least two of them.

Foaming of the rubber latex can be controlled further efficiently by using a neutral salt such as sodium chloride, sodium sulfate, sodium nitrate or potassium sulfate.

It is preferable to add the above electrolyte to the rubber latex in the form of 1 to 20 % by weight of an aqueous solution.

Decrease in foamability of the rubber latex by adding the electrolyte results from the effect that the electrolyte extinguishes foaming of the rubber latex caused by the emulsifier in the latex and the effect that the electrolyte forms minute latex coagula to reduce the viscosity of the rubber latex. In case that the rubber latex coagulation causes inferior quality of the product, it is possible to sufficiently decrease foamabiiity of the rubber latex only by adding the electrolyte in such an amount that the rubber latex does not coagulate. However, when the rubber latex is allowed to coagulate, it is possible to decrease foamability of the rubber latex more sufficiently by adding the electrolyte in such amount that the rubber latex forms minute coagula.

When the rubber latex can be coagulated as described above, particle size of the rubber latex coagula obtained by adding the electrolyte is preferably at most 0.5 µm. There is a tendency that the particle size of more than 0.5 µm decreases graft ratio of the copolymer latex after graft-polymerization and the quality of the product becomes inferior.

The amount of the electrolyte is preferably 10 to 95 parts by weight, more preferably 15 to 80 parts by weight based on 100 parts by weight of the emulsifier contained in the rubber latex in view of controlling foaming of the rubber latex. When the amount of the electrolyte is less than 10 parts by weight, there is a tendency that a sufficient effect on preventing rubber latex from foaming is not obtained. When it is more than 95 parts by weight, the particle size of the rubber latex coagula tends to be larger than 0.5 µm.

The method of removing the non-reacted monomer is not particularly limited, and the present invention shows an effect in case of using a method without vapor such as a method of removing the non-reacted monomer under reduced pressure and a method of bubbling inert gas.

The latex obtained after the graft polymerization can be treated according to a standard method which is employed in a process for producing ABS resin or MBS resin by emulsion polymerization. For example, a copolymer latex is coagulated according to a known coagulation process with acid or salt (such as coagulating of latex droplets by collecting coagulant droplets or mixing latex with a coagulant solution). Then, a mixture of water and copolymer coagula suspended therein is separated with filtration, centrifugation or the like. The mixture of the water and copolymer coagula suspended therein is separated and the wet copolymer coagula is dried according to a known method. Also, copolymer coagula obtained after graft polymerization can be granulated and dried by using a spraying dryer.

The present invention is explained below by means of examples, but the present invention is not limited thereto. Each evaluation item in the examples was measured according to the following methods. In the examples, "%" and "part(s)" represent "% by weight" and "part(s) by weight", respectively, unless otherwise noticed.

### [Non-reacted monomer]

A conical flask is charged with about 2 g of a rubber latex and it is precisely weighed. Thereto is added 2 ml of methyl ethyl ketone to coagulate the latex. Then, 20 ml of tetrahydrofuran is added and 0.02 g of cyclohexane is precisely weighed and injected therein. The conical flask is plugged and shook sufficiently, and the non-reacted monomer is extracted with the tetrahydroferan. By using a microsyringe, the tetrahydrofran phase is extracted and the amount of the non-reacted monomer is measured according to gas chromatography. The amount of the non-reacted monomer in the rubber latex is shown based on 100 % of the solid content of the rubber latex.

### [Precipitate amount]

A latex obtained by graft polymerization is filtered by using 100 mesh screen and the solid on the 100 mesh screen is washed. It is dried and weighed to measure precipitation amount. The precipitation amount is shown based on 100 % of the total monomer which is used to prepare the latex corresponding to the filtered weight.

### [Particle size of rubber latex]

The particle size of the rubber latex is measured by using NICOMP particle size measuring machine made by Pacific Scientific Inc.

Also, each rubber latex used in the Examples and Comparative Examples was prepared according to the following method.

### [Process for producing rubber latex]

A 3-liter deaerated pressure-resistant polymerization machine was charged with 2.0 parts of semi-hardened beef fallow fatty acid potassium salt, 0.44 part of tripotassium phosphate, 0.2 part of n-dodecylmercaptan, 0.014 part of ferrous sulfate, 0.0023 part of disodium ethylenediaminetetraacetate, 0.2 part of formaldehyde sodium sulfoxylate, 77 parts of pure water based on 100 parts of 1,3-butadiene. It was stirred and heated to 40°C. After reaching a pre-determined temperature, 0.05 part by weight of paramenthane hydroperoxide was added to start the polymerization. The reaction was continued for 13 hours to obtain a rubber latex having solid concentration of 46.3 % and particle size of 0.080 µm with 2.8 % of non-reacted monomer.

### EXAMPLE 1

The rubber latex prepared according to the above method was put into a 3-liter autoclave, and thereto was added 0.30 part of sodium sulfate based on 100 parts of the rubber latex.

Next, the latex was heated to 60°C. With stirring the latex at a rotating speed of 400 rpm, pressure was reduced through a vacuum pump having exhaust capacity of 18 liter an hour. Distance from the interface of rubber latex with foamed layer to the upper end of the foamed layer (hereinafter referred to as foamed layer height) was measured at the point where foamed layer grows largest accumulating onto the surface of rubber latex liquid before the reduced pressure reaches to 150 Torr.

When the reduced pressure reached 150 Torr, the vacuum pump was stopped and internal pressure of the polymerization machine was raised to atmospheric pressure by nitrogen. After that, upon extracting the rubber latex, the amount of non-reacted monomer and particle size of the rubber latex were measured.

Next, thereto were continuously added a monomer mixture of 28 parts of methyl methacrylate and 15 parts of styrene, and a liquid mixture of 0.10 part of t-butyl hydroperoxide and 0.03 part of oleic acid based on 100 parts of the solid content of the rubber latex to perform graft-polymerization. The amount of precipitation of the copolymer latex obtained after the graft-polymerization was measured. Results are shown in Tables 1 and 2.

### EXAMPLE 2

The same operation was performed as in Example 1 except for changing the amount of sodium sulfate to 0.59 part based on 100 parts of the solid content of the rubber latex. Results are shown in Tables 1 and 2.

### EXAMPLE 3

The same operation was performed as in Example 1 except for changing the electrolyte to 0.60 part of oxalic acid based on 100 parts of the solid content of the rubber latex. Results are shown in Tables 1 and 2.

### EXAMPLE 4

The rubber latex obtained according to the above method was put into a 3-liter glass autoclave, and 0.30 part of sodium sulfate was added thereto based on 100 parts of the rubber latex.

Next, the rubber latex was heated to 60°C, and pressure of the autoclave was reduced with stirring the mixture at a rotating speed of 400 rpm and controlling the exhaust amount of the vacuum pump to maintain the foaming layer height to 0.15 m. And the time required for the reduced pressure to 150 Torr was measured.

When the reduced pressure reached 150 Torr, the vacuum pump was stopped and internal pressure of the polymerization machine was raised to atmospheric pressure by nitrogen. After that, upon extracting the rubber latex, the amount of non-reacted monomer and particle size of the rubber latex were measured, Results are shown in Table 1.

### EXAMPLE 5

The same operation was performed as in Example 4 except for changing the amount of sodium sulfate to 0.59 part based on 100 parts of the solid content of the rubber latex. Results are shown in Table 1.

### COMPARATIVE EXAMPLE 1

The same operation was performed as in Example 1 except for adding no sodium sulfate. When internal pressure of the autoclave reached to 270 Torr, the foamed layer height was 0.33 m, which meant the foam reached the upper end of the interior of the autoclave. The foam flooded out of the container when pressure reduction was further continued. Results are shown in Tables 1 and 2.

### COMPARATIVE EXAMPLE 2

The same operation was performed as in Example 4 except for adding no sodium sulfate. Results are shown in Table 1.

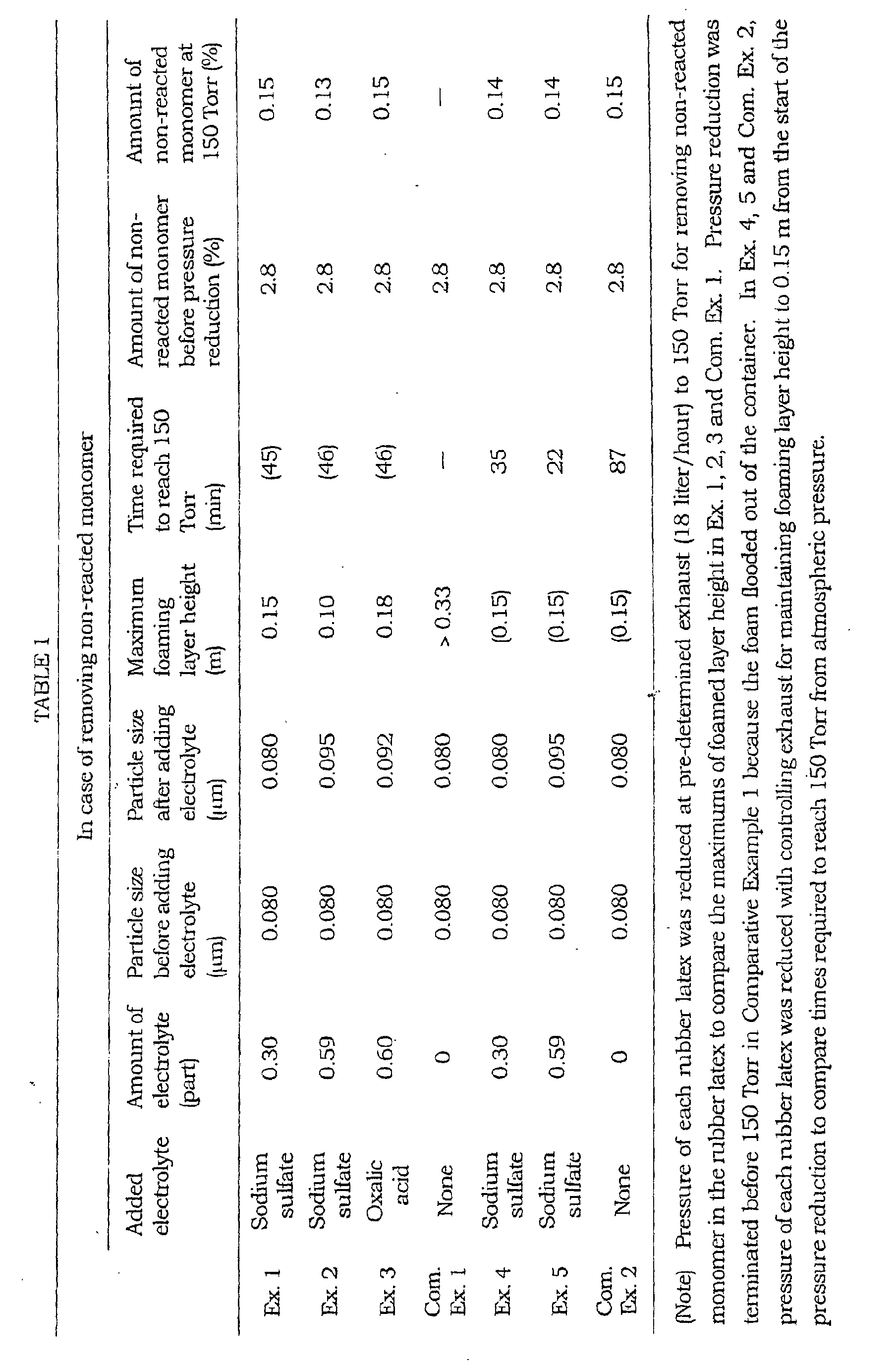

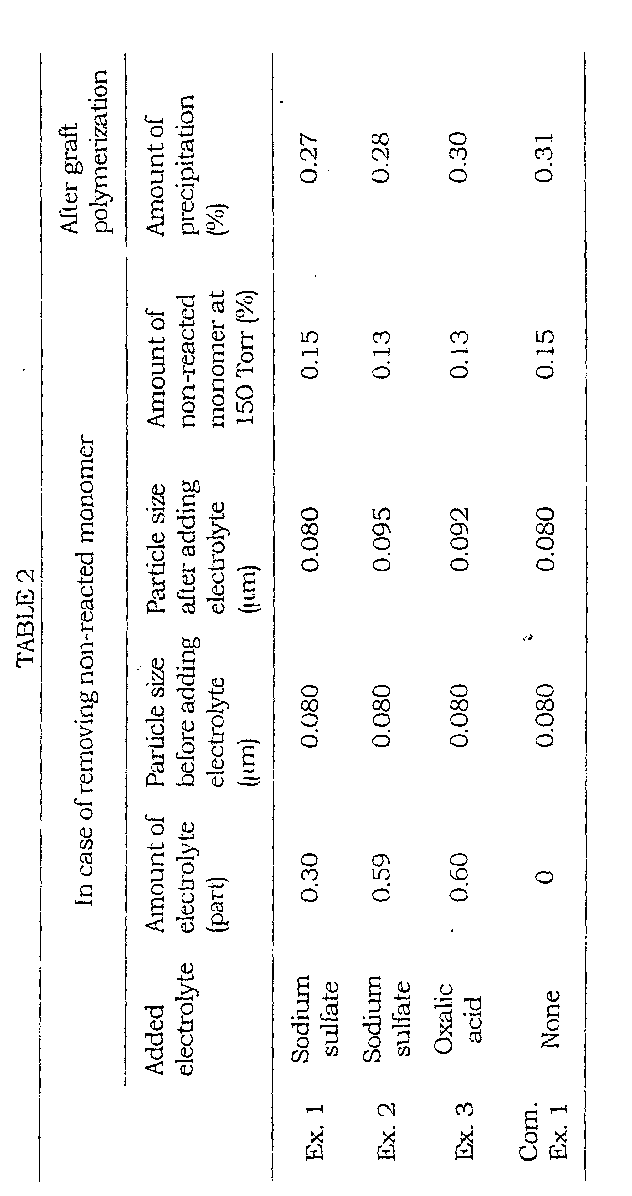

From the results of Table 1, it is seen that non-reacted monomers in a rubber latex can be removed with controlling foaming of the rubber latex in a shorter period than the conventional method according to the process of present invention.

Also, from the results of Table 2, it is seen that amount of precipitation after graft-polymerization can also be similar to that of the conventional method according to the process of the present invention.

### INDUSTRIAL APPLICABILITY

A graft copolymer latex can be prepared without decreasing productivity by removing non-reacted monomer from a rubber latex in a short time according to the present invention, in which the copolymer latex is prepared by graft-polymerizing a rubber latex and a monomer graft polymerizable with the rubber latex.

## Claims

1. A process for producing a graft copolymer latex obtained by graft-polymerizing a conjugated rubber latex and at least one monomer graft-copolymerizable with the rubber latex, which comprises:
adding an electrolyte to the conjugated rubber latex before graft-polymerization,
removing a non-reacted monomer in the rubber latex in the presence of the electrolyte, and then
graft-polymerizing the monomer.

2. A process for producing a graft copolymer latex according to Claim 1, wherein the electrolyte is at least one selected from the group consisting of an organic acid having a carboxyl group and at most 6 carbon atoms, a salt thereof, an inorganic sodium salt and an inorganic potassium salt.

3. A process for producing a graft copolymer latex according to Claim 1, wherein the electrolyte is a neutral salt.
